# EUROPEAN PATENT APPLICATION

(11) **EP 1 092 602 A1**
(43) Date of publication of application: **18.04.2001**
(21) Application number: 99600017.0
(22) Date of filing: 13.10.1999
(51) Int. Cl.: B60S 1/34

(54) **Windscreen wiper**

(71) Applicant: Karramanoukian, Haroutoun A., Aleppo (SY)
(72) Inventor: Karramanoukian, Haroutoun A., Aleppo (SY)
(74) Representative: Argyriadis, Korinna

(57) **Abstract**

The application relates to a windscreen wiping system for vehicles in which the wiper arm and/or blade comprises a hinged portion (19) attached to the free end (27) of the wiper. The arm comprises the usual portion (24), an extended portion (27) and the outer, hinged portion (19). Furthermore it includes two attachment points (29,30) for the blade, depending on whether the extended portion (27) and hinged portion (19) are in use. A mechanical transmission system is provided to transmit the rotary motion of the arm (24), relative to the vehicle body, to the hinged portion of the wiper whereby the hinged portion (19) rotates in the opposite sense to the main wiper arm, such that interference of the wiper with the vehicle body is avoided. The system is suited to modifying existing systems, in order to expand the wiped portion of a windscreen.

## Description

The invention relates to a windscreen wiper for automobiles, airplanes, trains, ships, etc., which wipes the whole surface of the front glass without leaving any traces. This windscreen wiper comprises a mechanical unit with a joint connected to another shorter wiper. It comprises mechanical parts with an advanced motion, that can be added to the main axle of the windscreen wiper.

### Background of the invention

After the introduction of automobiles, glass wipers were invented in order to keep the front glass clean, and free of dust, so that the driver would be able to see his way clearly during rain and snow drives. Indeed, automobile manufacturing companies tried to develop windscreen wipers, but commercially their efforts were not successful because the manufacturing was complicated, so there is no a device available and capable of cleaning the whole surface of the automobile's front glass. The purpose of the windscreen wiper is to clean the whole surface of the automobile-glass, but the wipers available today don't fulfil this purpose exactly, and they leave certain areas of the glass without cleaning, which disturbs the driver and his passengers. The present invention's scope is to eliminate the above mentioned disadvantages by a new device which was developed for use in cleaning the glass.

The mechanical unit for the automobile wipers in use today remains the same all the time and they does not change, yet a simple, easy to mount mechanical unit is added on its main axle, introducing also a trifle modification on the wipers in use today by adding a joint connected to another wiper, a short one compared with the first wiper, the overall height of the advanced unit being not more than 12 mm and its diameter 60 mm.

### Brief description of the invention

The present invention is a group of mechanical parts with an advanced motion, that is added to the main axle of the windscreen wiper. The advanced unit works by adding a short wiper that is hinged with the traditional one, which makes the process of windscreen-wiping more efficient than before in that the windscreen is wiped completely with no traces of dust left on it. This improvement is economical, inexpensive, easily manufactured and small-sized, so it does not contradict with any mechanical part of in the automobile when installed.

The most important advantages of this invention are:
a) its compatibility with the wiping system used in automobiles nowadays, b) three additional parts are added to the current system which are: 1) the simple mechanic parts.
2) the arm linking and and driving the short wiper, and
3) the short wiper.

This way every automobile manufacturing company continues manufacturing the same models without change, with only these additional parts added without no complications.

It is to be noted that there are two centers (29, 30) for fixing the wiper's arm, one of them for the advanced wiper, and the other for the traditional one. A short wiper is added to the design of the wiper on the upper right corner pivoted with the long wiper. The center of the long wiper's arm must be relocated or it will not function properly, so that the changed distance is equal to half the length of the short wiper.
Suppose the old wiper is 40 cm long; and we want to connect the short wiper with it, which is 12 cm long. Then, half the length of the short wiper must be added to the length of the old wiper's arm, which is 6 cm. so, the new arm would be 40+6=46 cm.
In other words, the old wiper's arm should be elongated by half the new wiper's length. The fixing center of the arm must be changed by half the length of the short wiper. By the same ratio, the fixing center of the long wiper would be changed.

### Brief description of drawings

Fig 1 shows the main axle.

Fig 2 shows the arm of the wiper.

Fig 3 shows the advanced arm for driving the short wiper.

Fig 4 shows the mechanical parts of the moving unit.

Fig 5 shows the combinated shape of the two wipers.

Fig 6 shows the movement of the two wipers.

Fig 7,7a shows the mechanical unit and its movement and the internal gear.

Fig 8 shows the circular metallic part with perpendicular shoulder with the external teeth as gear.

Fig 9 shows the fixing center (35) for the roller bearing (33) and the lap (34) near the main axle.

Fig 10 shows the transmission axle and the bearing (9).

Fig 11 shows the circular metallic part with perpendicular shoulder with the external teeth as gear.

Fig 12 shows the other side of the roller bearing center and the ring center (11).

### Detailed description of the invention

The invention is a group of mechanical parts with an advanced motion, that can be added to the main axle of the windscreen wiper. The advanced unit works by adding short wiper that is hinged with the traditional one which makes the process of windscreen-wiping more efficient than before, in that windscreen is wiped completely with no traces of dust left on it. This improvement is economical, inexpensive, easily manufactured and small-sized, so it does not contradict with any mechanical part of in the automobile when installed.

It is to be noted that there are two centers (29,30) for fixing the wiper's arm, one of them for the advanced wiper, and the other for the traditional one. A short wiper is added to the design of the wiper on the upper right corner pivoted with the long wiper. The center of the long wiper's arm must be relocated or it will not function properly, so that the changed distance is equal to half the length of the short wiper.
Suppose the old wiper is 40 cm long; and we want to connect the short wiper with it, which is 12 cm long. Then, half the length of the short wiper must be added to the length of the old wiper's arm, which is 6 cm. so, the new arm would be 40+6=46 cm.
In other words, the old wiper's arm should be elongated by half the new wiper's length. The fixing center of the arm must be changed by half the length of the short wiper. By the same ratio, the fixing center of the long wiper would be changed.

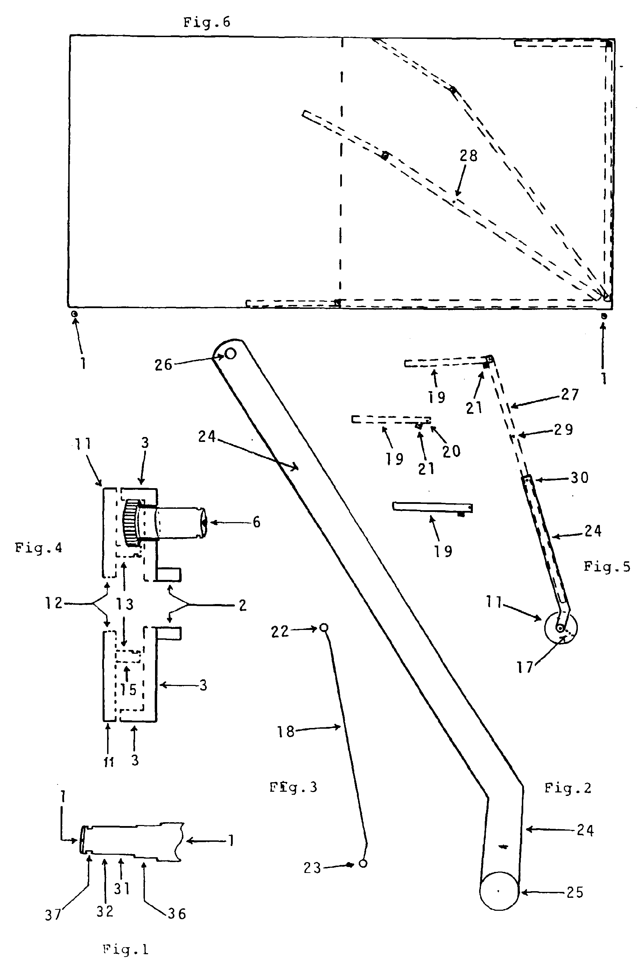

A short wiper hinged with the long one is added. And as shown in Figure 6 the movement of the advanced wiper being as follows: The wiping begins at the upper right corner, and the short wiper at first moves touching the inner surface of the windscreen frame. The two hinged wipers start moving together with a 90° angle between them and by the circular movement that angle increases gradually until it becomes 180°, after having passed the middle of the windscreen. This movement is from right to left while another wiper at the left corner wipes the left side of the windscreen completely. The mechanical parts of the moving unit which are put together are shown in Figure 4.

This unit gets its motion from the main axle (1) which rotates in a circular motion until 90°. When the gear is added it acts like a medium element where it connects the teeth as gear (5) on one side and the teeth as gear (15) on the other. So, when the main axle rotates 90° right and left, the motion of the teeth as gear (15) will have reached 180°, that is it always precedes the main axle (1) and its speed is twice as much as that of the main axle.

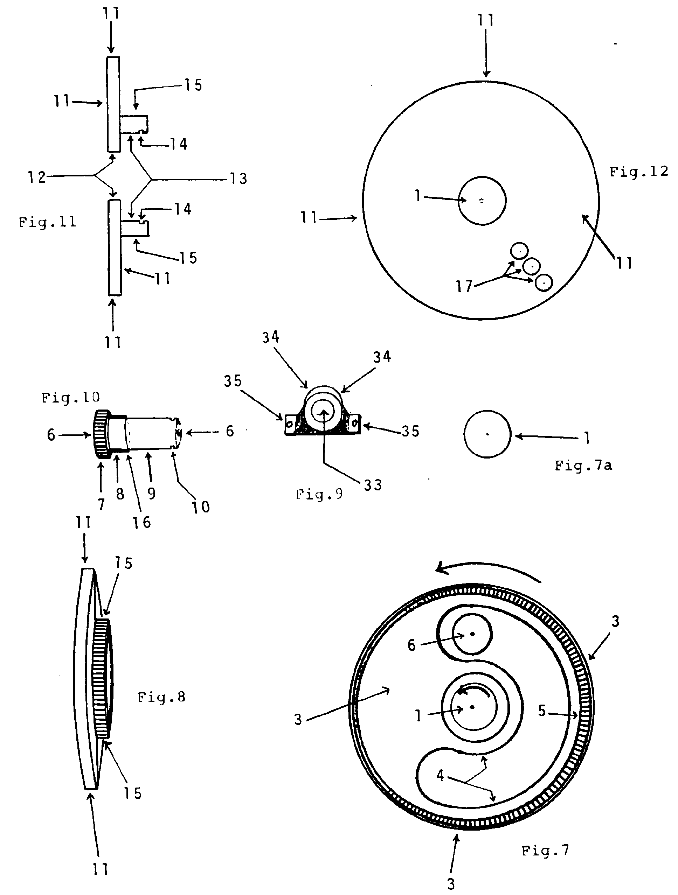

The other side of gear (15) is shown in Figure 12. There are adapting centers (17) on which the hinge of the wiper's arm (23) is fixed, and moves the arm (18) by the pivot (23) whose terminal pivot (22) is also fixed on the center of the pivot of the short wiper (21). In this way, the two wipers are moved together as shown in Figure 6. The adapting centers (17), instead of being 3 holes, may be arranged in one elongated piece with 3 holes for simpler manufacture.

Following is an explanation and statement of the numbers and their indices, illustrated in the figures attached with the description of the present invention:
1.The main axle which drives the wiper circularly at 90° to the right and to the left.
2. Back mount center for the metallic base (3), which is situated on the main axle (1).
3.Metallic base fixed on the main axle (1), and it is driven by the axle. Within the base there is semi-circular guide dug into it.
4.Crescent hole as guide within the metallic base (3).
5.Internal teeth as gear formed within the internal perimeter of the metallic base (3).
6. Transmission axle.
7.Teeth as gear formed at the end of axle (6).
8.The height of the crescent metallic guide (4).
9. Roller bearing mounted on transmission axle (6).
10.Safety center for the bearing fixed (9).
11.Circular metallic part with perpendicular shoulder on the circumference, on the outside of which teeth (15) are formed on the smaller diameter.
12.Internal hole, through which passes the main axle.
13.Roller bearing center in circular metallic part (11).
14.Safety center, to fix bearing (13) on it.
15.External teeth as gear on circular metallic part (11).
16.Supporting shoulder for bearing on transmission axle (6).
17.Adapting centers, with three pivots (23) fixed on. It is recommended to combine the said centers in one standard longitudinal one. In that case pivot (23) may be controlled.
18.Metallic pivoted link from both sides, which drives the short wiper.
19.Short wiper.
20.Pivoted center for the short wiper.
21.Pivoted center for the short wiper, on which pivot (22) is mounted.
22.Pivot for the metallic link (18).
23.Pivot for the metallic link (18), because metallic link (18) is pivoted from both sides, which pivot (23) is fixed on the adapting center (17).
24.The arm of the wiper.
25.Center to fix the wiper on the main axle 1.
26.Center to fix the long wiper.
27.The long wiper.
28.Centers to fix the arm of the long wiper.
29.Center to fix the arm of the long advanced wiper.
30.Center to fix the arm of the traditional wiper.
31.Fixing center of the main axle (1) for metallic base (3).
32.Center for fixing the roller bearing.
33.Center to transmission axle (6) with roller bearing.
34.Lap for roller bearing.
35.Center to fix bearing.
36.Fixing center, located on the main axle (1), on it wiper arm (24) is fixed
37.Safety center to fix roller bearing.

## Claims

1. A windscreen wiper characterized in that three additional parts are added to the current system a) the mechanic parts (7, 8, 10, 12), b) the arm (18), and c) the short wiper (19); where the short wiper is hinged with the long one, fixed on two centers (29, 30) through the adapting centers (17) moving the arm (18) by the pivot (23), whose terminal pivot (22) is also fixed on the pivot center of the short wiper (21); where the unit gets its motion from the main axle (1), which rotates in a circular motion until 90°, and when the gear is added it acts like a medium element where it connects the teeth as gear (5) on one side and the teeth as gear (15) on the other; where when the main axle rotates 90° right and left, the motion of the teeth as gear (15) will have reached 180° and always precedes the main axle (1) and its speed is twice the speed of the main axle.

2. The movement of the unit according to claim 1, where the wiping begins at the upper right corner and the short wiper at first moves touching the inner surface of the windscreen frame, the two hinged wipers start moving together with a 90° angle between them and by the circular movement that angle increases gradually until it becomes 180°, after having passed the middle of the windscreen from left to right, while another wiper at the left corner wipes the left side of the windscreen completely.

3. The use of the windscreen wiper according to claims 1 and 2 in automobiles, airplanes, trains and ships.
